# EUROPÄISCHE PATENTSCHRIFT

(11) **EP 3 091 749 B1**
(45) Veröffentlichungstag und Bekanntmachung des Hinweises auf die Patenterteilung: **21.02.2018**
(21) Anmeldenummer: 15001356.3
(22) Anmeldetag: 07.05.2015
(51) Int. Cl.: H04Q 9/02, F24F 11/00

(54) **SYSTEM ZUR ÜBERWACHUNG DER FEUCHTEBELASTUNG VON LIEGENSCHAFTEN**
SYSTEM FOR MONITORING THE WET LOAD OF PROPERTIES
SYSTÈME DE SURVEILLANCE DE LA CHARGE D'HUMIDITÉ D'IMMEUBLES

(43) Veröffentlichungstag der Anmeldung: 09.11.2016
(73) Patentinhaber: Deutsche Telekom AG, 53113 Bonn (DE)
(72) Erfinder: HEINZ, Sebastian, 53227 Bonn (DE); WINDHEUSER, Jörg, 40627 Düsseldorf (DE); SCHMIDT-GABRIEL, Michael, 82234 Weßling (DE); BEER, Andreas, 85630 Grasbrunn (DE)
(74) Vertreter: Cohausz Hannig Borkowski Wißgott

(56) Entgegenhaltungen:
- EP-A1- 1 746 556
- DE-A1- 10 323 686
- DE-A1- 19 634 338
- DE-U1-202007 016 687
- US-A1- 2015 084 784

## Beschreibung

Die Erfindung betrifft ein System zur Überwachung der Feuchtebelastung von Liegenschaften umfassend wenigstens ein Messmodul, bevorzugt eine Vielzahl von Messmodulen, wobei jedes Messmodul wenigstens einen Raumluftfeuchtesensor umfasst und einen Temperatursensor umfasst, mittels dem die Temperatur auf oder nahe derjenigen Montageoberfläche messbar ist, auf welcher das Messmodul montiert ist und eine Elektronik aufweist, die eingerichtet ist, Messwerte zumindest von gemessener Temperatur und Raumluftfeuchte, sowie den Zeitpunkt der Messungen in zeitlichen Abständen zu erfassen und durch Telekommunikation zu versenden und weiter umfassend wenigstens eine zu dem wenigstens einen Messmodul separate Datenbank zur Speicherung der Messwerte eines jeweiligen Messmoduls, die vom Messmodul durch Telekommunikation versendet sind.

Ein solches System ist bekannt aus der DE 196 34 338 A1. Das Dokument US 2015/084784 A1 beschreibt weiterhin die sensorische Überwachung von Bienenstöcken und EP 1 746 556 A1 beschreibt die Erfassung von raumspezifischen Umweltdaten mittels Heizkostenverteilern. DE 103 23 686 A1 beschreibt einen Lüftungskontrollsensor zur Verhinderung von Schimmelbildung und DE 20 2007 016 687 U1 beschreibt eine Überwachungseinrichtung zum Zweck des Energiesparens beim Lüften. Keines der Dokumente beschreibt die Optimierung des Montageortes der jeweiligen verwendeten Sensorik.

Im Stand der Technik ist es allgemein bekannt, dass Feuchteschäden in Liegenschaften auftreten können. Solche Feuchteschäden können beispielsweise darauf zurückzuführen sein, dass die Bewohner einer Wohnung in einer Liegenschaft nicht regelmäßig lüften und hierdurch die relative Luftfeuchtigkeit so hoch ansteigt, dass Kondensation an den typischerweise kälteren Raumwänden stattfindet und Schimmelwachstum begünstigt.

Neben einem Fehlverhalten beim Lüften können Feuchteschäden jedoch auch durch Baumängel hervorgerufen sein, wie beispielsweise eine unzureichende äußere Bauwerksabdichtung, so dass Feuchte aus dem Bodenbereich, aber auch Niederschlagswasser durch Wände oder Bauteile hindurch zu einer Feuchtebelastung und damit einhergehenden Schimmelrisiken führen können.

Häufig liegt dabei besonders bei vermieteten Wohnungen die Problematik vor, dass bei auftretenden Feuchteschäden, insbesondere solche, die mit einer Schimmelbelastung einhergehen, der Mieter den Vermieter auf die Problematik aufmerksam macht, der Vermieter jedoch die Meinung vertritt, dass dieses Problem vom Mieter zu vertreten sei, nämlich aufgrund unzureichender Lüftung. Regelmäßig hat es ein Mieter in einem solchen Fall schwer, eine auf Baumängel zurückzuführende Feuchtebelastung nachzuweisen.

Im Stand der Technik sind Geräte bekannt geworden, mit denen beispielsweise die Möglichkeit besteht, die relative Raumluftfeuchte und Raumlufttemperatur zu erfassen, um hieraus den Taupunkt zu bestimmen, um so einem Bewohner, zum Beispiel dem Mieter einer Wohnung, einen Indikator anzuzeigen, ob bzw. wann Lüften sinnvoll ist bzw. ob konkret eine aktuelle Schimmelgefahr vorliegt.

Solche Geräte sind jedoch regelmäßig insoweit unzuverlässig, da die Geräte ihre Messungen und Abschätzungen sowie daraus resultierende berechnete Empfehlungen ausschließlich auf der Raumluftfeuchte und der Raumlufttemperatur basieren, und somit unbekannt bleibt, wann an einem Ort in der Wohnung tatsächlich irgendwo in einem Wandbereich die Temperatur so niedrig liegt, dass der Taupunkt unterschritten und eine Kondensation von Raumluftfeuchte aufgetreten ist. Darüber hinaus lassen sich prinzipbedingt mit solchen im Stand der Technik bekannten Geräten keinerlei Information über Feuchteschäden und damit einhergehende Schimmelrisiken gewinnen, die auf Baumängel zurückzuführen sind.

Vor diesem Hintergrund ist es eine Aufgabe der Erfindung, ein System zur Überwachung der Feuchtebelastung von Liegenschaften bereitzustellen, mit dem eine Optimierung des Montageortes ermöglicht wird und mit dem eine Feuchtebelastung und damit ggf. einhergehende Schimmelgefahr sicher und zuverlässig überwacht werden kann, wobei es bevorzugt eine weitere Aufgabe der Erfindung ist, ein solches System bereitzustellen, das bei einer streitigen Auseinandersetzung zwischen Mieter und Vermieter bzgl. eines festgestellten Feuchtefalls und ggf. bereits daraus resultierender Schimmelbefall eine Schlichtung gefunden werden kann bzw. eine streitige Auseinandersetzung zwischen den Parteien von vornherein vermieden werden kann, aufgrund des Vorliegens objektiver Beurteilungskriterien.

Diese Aufgabe wird erfindungsgemäß dadurch gelöst, dass bei einem System zur Überwachung der Feuchtebelastung für Liegenschaften der eingangs genannten Art weiterhin ein jeweiliges Messmodul eingerichtet ist, im Rahmen der Durchführung einer Installation bei einer Bewegung des Messmoduls über die Montageoberfläche hinweg ein den Gradienten der Montageoberflächentemperatur anzeigendes Maß zu signalisieren.

Ein wesentlicher Kernaspekt der Erfindung ist es, ein System bereitzustellen, mittels welchem nach einer Installation eines oder mehrerer Messmodule innerhalb einer Wohnung einer Liegenschaft eine permanente Überwachung der Feuchtebelastung an den Installationsorten des jeweiligen Messmodules möglich ist. Hierfür sieht es die Erfindung vor, dass die genannten Messwerte umfassend die Temperatur nahe der Montageoberfläche, bevorzugt die Temperatur auf der Montageoberfläche und die Raumluftfeuchte, bevorzugt periodisch gemessen und nach Telekommunikation in der genannten Datenbank manipulationssicher gespeichert werden.

Hierfür kann es beispielsweise vorgesehen sein, dass eine Datenbank in einem sogenannten Trustcenter eingerichtet und dort verwaltet wird, so dass weder die Bewohner bzw. die Mieter einer Wohnung noch die Vermieter oder Hausverwaltungen Zugriff auf diese Daten haben, und somit von keiner der eventuell beteiligten Streitparteien eine Manipulation möglich ist.

Hierbei kann es die Erfindung auch vorsehen, dass die Übertragung der Messdaten aus einem jeweiligen Messmodul in die Datenbank digital signiert erfolgt, so dass hierdurch auch die Authentizität des absendenden Messmodules gewährleistet ist und jederzeit verifiziert werden kann.

Durch die Erfassung zumindest der Raumlufttemperatur sowie der Temperatur auf oder nahe der Montageoberfläche eines jeweiligen Messmoduls besteht die Möglichkeit, aus diesen Messwerten in Verbindung mit einer angenommenen mittleren Raumlufttemperatur wie zum Beispiel 20 Grad oder aber auch in Verbindung mit einer konkreten messtechnisch tatsächlich erfassten Raumlufttemperatur (mittels Raumtemperatursensor des Messmoduls), den Taupunkt im Raum des Messmodules zu berechnen, so dass beispielsweise hierdurch festgestellt werden kann, ob durch den vorgenannten Temperaturmesswert an der Montageoberfläche, d. h. auf dieser oder zumindest nahe dieser Montageoberfläche, der Taupunkt unterschritten ist. Sofern dies der Fall ist, liegt das Risiko einer Kondensatbildung an der Montageoberfläche und damit einhergehendes Risiko einer Schimmelbildung vor.

Die Erfindung kann dabei beispielsweise vorsehen, dass die Elektronik eines jeweiligen Messmoduls oder aber eine externe Datenverarbeitungsanlage, beispielsweise diejenige, welche die eingangs genannte Datenbank verwaltet, eingerichtet ist, um aus den gemessenen Werten den Taupunkt zu berechnen. Hiernach kann entweder der Taupunkt selbst oder lediglich eine Information über eine Taupunktunterschreitung durch den konkreten Temperaturmesswert an der Montageoberfläche oder auch eine aus dem Taupunkt zurückgerechnete für die Raumlufttemperatur maximal erlaubte Grenzraumluftfeuchte in Verbindung mit den Messwerten gespeichert werden.

Werden solche Messungen, Berechnungen und Speicherungen, über die Zeit hinweg permanent bevorzugt periodisch vorgenommen, kann aus den Messdaten beispielsweise von einer zertifizierten Stelle, wie einem eingangs genannten Trustcenter ein zeitliches Protokoll erstellt werden, aus welchem sich ersehen lässt, ob zumindest zeitweise Taupunktunterschreitungen oder allgemein Feuchterisiken oder Schimmelrisiken vorgelegen haben oder nicht.

Haben beispielsweise keine Taupunktunterschreitungen oder Feuchtegrenzwertüberschreitungen vorgelegen, ist es jedoch trotzdem konkret zu einem nachweisbaren Fall einer Feuchtebelastung an oder in der Nähe der Montageoberfläche gekommen, so deutet dies darauf hin, dass diese Feuchtebelastung voraussichtlich nicht auf ein Fehlverhalten des Bewohners beispielsweise des Mieters der Wohnung zurückzuführen ist, sondern ggf. auf einen Baumangel.

Die Erfindung kann in einer Weiterbildung auch vorsehen, dass ein jeweiliges Messmodul einen Feuchtesensor umfasst, mittels dem die Feuchtewerte der Montageoberfläche unmittelbar erfassbar sind.

Die Erfindung kann dabei einen solchen Feuchtesensor zur unmittelbaren Erfassung der Feuchtewerte der Montageoberfläche in Ergänzung zur messtechnischen Erfassung der Temperatur an der Montageoberfläche sowie der Raumluftfeuchte vorsehen, um eine definitive Aussage darüber zu erhalten, ob tatsächlich eine Feuchtebelastung an der Montageoberfläche auftritt, beispielsweise wenn durch die gemessenen und übertragenen Messwerte eine Taupunktunterschreitung festgestellt wurde.

Diesbezüglich ist festzuhalten, dass die Feststellung einer Taupunktunterschreitung durch die gemessene Temperatur am Montageort nicht zwingend zu einem Luftfeuchtigkeitsausfall an der Oberfläche führen muss, sondern lediglich eine hohe Wahrscheinlichkeit dafür gegeben ist.

Das erfindungsgemäße System kann weiterhin vorsehen, dass die Elektronik eines jeweiligen Messmoduls oder eine externe Datenverarbeitungsanlage, insbesondere eine die Datenbank verwaltende Datenverarbeitungsanlage weiterhin eingerichtet ist, Wetterdaten insbesondere Niederschlagsdaten vom Montageort also dem Ort der Liegenschaft, wo ein oder mehrere Messmodule montiert sind, zusammen mit den kommunizierten Messwerten und ggfs. daraus berechneten Werten zu speichern, insbesondere die Werte zu korrelieren.

Beispielsweise kann so festgestellt werden, ob eine messtechnisch erfasste Raumluftfeuchte darauf zurückzuführen ist, dass auch eine hohe wetterbedingte Außenluftfeuchte gegeben ist oder aber darauf, dass nicht ausreichend gelüftet wurde und erst hierdurch die Raumluftfeuchte angestiegen ist.

Weiterhin besteht die Möglichkeit, durch Korrelation der Wetterdaten mit den Messdaten festzustellen, ob die Feuchtewerte am Montageort auf eine Kondensation von Raumluftfeuchte an der den Taupunkttemperaturwert unterschreitenden Wand zurückzuführen ist oder aber auf einen Niederschlag, der sich z.B. aus den Wetterdaten ergibt.

Werden beispielsweise feuchte Werte am Montageort eines Messmoduls regelmäßig dann erfasst, wenn die Wetterdaten einen Niederschlag zu denselben Zeiten anzeigen, so besteht eine Wahrscheinlichkeit dafür, dass die Feuchtebelastung eher auf einen Baumangel zurückzuführen ist als auf unzureichendes Lüften durch die Bewohner.

Das erfindungsgemäße System kann demnach ersichtlich dazu beitragen, eventuell festgestellte Feuchtebelastung und damit ggf. bereits einhergehenden Schimmelbefall zu objektivieren hinsichtlich der Schadensursachen.

Dieses ist besonders auch deswegen mit hoher Zuverlässigkeit möglich, da das erfindungsgemäße System es vorsieht, die jeweiligen Messdaten und bevorzugt in Kombination die Wetterdaten über einen langen Zeitraum zu erfassen, insbesondere fortwährend und unaufhörlich nach einer Installation eines oder mehrerer jeweiliger Messmodule.

Dabei kann es beispielsweise die Erfindung vorsehen, dass in jedem Raum einer zu überwachenden Liegenschaft d. h. beispielsweise mehrfach pro Wohnung entsprechende Messmodule installiert werden, die ihre Messwerte an die eingangs genannte Datenbank kommunizieren.

Eine Weiterbildung des Systems kann es vorsehen, dass die Elektronik eines jeweiligen Messmoduls eingerichtet ist durch Funktriangulation, insbesondere über GSM, den Montageort des Messmoduls automatisch und selbsttätig zu bestimmen, insbesondere den festgestellten Montageort an die Datenbank zu kommunizieren, wobei besonders anhand dieses festgestellten Montageortes auch die Möglichkeit besteht, die Wetterdaten in Abhängigkeit des ermittelten Montageortes aus einer Wetterdatenbank zu ermitteln, zumindest sofern die Wetterdaten nicht selbst am Montageort eines jeweiligen Messmoduls durch eine Wettermessstation konkret messtechnisch erfasst werden, was im Rahmen des erfindungsgemäßen Systems ebenso möglich ist.

Das System kann insoweit weitergebildet werden, dass die Elektronik eines jeweiligen Messmoduls weiterhin einen Bewegungssensor umfasst, mittels dem die Bewegung eines Messmoduls, insbesondere Bewegungen nach der Installation und Erstinbetriebnahme feststellbar sind.

So wird hierdurch gewährleistet, dass der Bewohner, insbesondere der Mieter einer Wohnung ein zum Beispiel durch eine Liegenschaftsverwaltung installiertes Messmodul nicht nachträglich entfernt und an einen anderen Ort zum Zwecke der Messdatenerfassung ablegt und hierdurch die Messdatenerfassung manipuliert.

Durch die Möglichkeit mittels eines Bewegungssensors, wie beispielsweise eines Beschleunigungssensors, jegliche Bewegung eines Messmoduls nach der Erstinstallation festzustellen, kann für einen solchen festgestellten Fall eine Alarmierung erfolgen, um sodann die Montage des Messmoduls überprüfen zu lassen, beispielsweise durch die Hausverwaltung.

Das erfindungsgemäße System kann weiterhin vorsehen, dass ein jeweiliges Messmodul einen Sensor umfasst, mittels dem eine Lüftung des Raumes detektierbar ist, in welchem das Messmodul montiert ist.

So kann auch ein eine Lüftung eines Raumes anzeigender Wert oder ein Ereignis an die eingangs genannte Datenbank kommuniziert und in dieser zusammen mit den Messdaten, ggf. in Verbindung mit den Wetterdaten gespeichert, insbesondere zeitlich protokolliert werden. So besteht jederzeit die Möglichkeit, auch das Lüftungsverhalten der Bewohner einer Wohnung einer Liegenschaft zu überprüfen und eventuelle Aussagen über die Ursache einer Feuchtebelastung zu objektiveren.

Um eine Information darüber zu generieren, ob die Lüftung eines Raumes erfolgt, kann beispielsweise ein Raumtemperatursensor eingesetzt werden, wobei die Elektronik im Messmodul eingerichtet ist, ein Lüften anhand einer Raumlufttemperaturänderung festzustellen, beispielsweise wenn sich die Raumlufttemperatur innerhalb eines vorbestimmten Zeitintervalls um einen bestimmten Mindestbetrag ändert.

Besonders in der kälteren Jahreszeit ist ein Abfallen der Raumlufttemperatur innerhalb kurzer Zeit ein sicheres Indiz dafür, dass aktuell gelüftet wird, so dass hieraus eine entsprechende Information über die Durchführung einer Lüftung generiert und an die Datenbank kommuniziert werden kann.

In gleicher Weise besteht auch die Möglichkeit, einen Raumluftfeuchtesensor innerhalb des Messmoduls zu diesem Zweck einzusetzen, wobei sodann die Elektronik eingerichtet ist, ein Lüften anhand einer Raumluftfeuchteänderung innerhalb eines vorbestimmten Zeitintervalls festzustellen.

Zu denselben Zwecken nämlich der Feststellung einer Lüftung kann es auch vorgesehen sein, einen Strömungssensor in einem Messmodul vorzusehen und die Elektronik derart einzurichten, dass ein Lüften anhand einer festgestellten Luftströmung insbesondere eine Luftströmung, die länger vorliegt als eine vorbestimmte Zeitdauer feststellen.

Besonders die Korrelation bei einer vorbestimmten Zeitdauer stellt sicher, dass das Vorliegen einer Lüftung nicht bereits dadurch manipuliert werden kann, dass ein Bewohner gegen das Messmodul pustet.

Bei allen diesen vorgenannten Möglichkeiten kann die Elektronik eingerichtet sein, eine Information über stattgefundene Lüftungen und insbesondere eine Zeitinformation, wann eine solche Lüftung stattgefunden hat, zusammen mit den Messwerten in die Datenbank zu übertragen und dort zu speichern.

Um eine möglichst genaue und sichere Messdatenerfassung zu gewährleisten, kann es das System vorsehen, dass ein jeweiliges montiertes Messmodul in Höhenrichtung beabstandete Luftdurchgangsöffnungen, insbesondere am äußeren Gehäuseumfang aufweist. Die üblicherweise in Räumen von unten nach oben vorliegenden Luftströmungen können somit regelmäßig zu einem sicheren Luftaustausch im Gehäuse eines Messmodules führen und zuverlässige Messungen gewährleisten.

Sollte dieses in Einzelfällen doch nicht möglich sein bzw. auch unabhängig hiervon kann das System in einer Weiterbildung auch vorsehen, dass ein jeweiliges Messmodul eine bevorzugt intermittierend betriebene Luftförderungsvorrichtung aufweist, so dass die Möglichkeit besteht, mit dieser einen Luftaustausch innerhalb des Messmoduls, zum Beispiel unmittelbar vor einer anstehenden Messung zu bewirken.

Eine Weiterbildung kann weiterhin vorsehen, dass ein jeweiliges Messmodul eingerichtet ist, eine Warnmeldung bei einem gemessenen Feuchtewert, der einen Grenzwert überschreitet oder bei einer festgestellten Taupunktunterschreitung an ein z.B. mobiles Kommunikationsgerät zu kommunizieren.

Dies kann beispielsweise über eine sogenannte Applikation erfolgen, die auf einem mobilen Telekommunikationsgerät läuft, oder auch durch eine sogenannte Pushnachricht zum Beispiel in Form einer E-Mail. Die entsprechenden Kommunikationsadressen und -möglichkeiten zwischen dem installierten Messmodul und einem mobilen Kommunikationsgerät können zwischen diesen beiden Geräten entsprechend vereinbart sein. Beispielsweise können ein oder mehrere Messmodule in einer Applikation, die auf einem mobilen Telefon läuft, angemeldet sein.

In Verbindung mit dem erfindungsgemäßen System ist es vorteilhaft, dass ein Messmodul innerhalb eines Raumes einer Liegenschaft an denjenigen Orten des Raumes installiert wird, die besonders für eine Feuchtebelastung anfällig sind, also im Wesentlichen die kältesten Stellen des Raumes. Solche kalten Stellen innerhalb eines Raumes können beispielsweise mittels einer Wärmebildkamera ermittelt und hierdurch die Montageorte eines jeweiligen Messmoduls festgelegt werden.

Stehen solche Wärmebildkameras oder andere Temperaturmessverfahren für die Installation jedoch nicht zur Verfügung, so sieht das erfindungsgemäße System vor, dass ein jeweiliges Messmodul eingerichtet ist, im Rahmen der Durchführung einer Installation bei einer Bewegung des Messmoduls über die Montageoberfläche hinweg, ein den Gradienten der Montageoberflächentemperatur anzeigendes Maß zu signalisieren.

So kann ein Installateur beispielsweise durch die Anzeige dieses Gradienten den Montageort optimieren.

Das Messmodul kann durch die Bewegung die Richtung einer steigenden oder fallenden Wandtemperatur anzeigen, so dass der Installateur im Wesentlichen versuchen wird, ein jeweiliges Messmodul in die Richtung fallender Temperaturen entlang der Wand zu bewegen, um so einen möglichst optimalen Montageort zu identifizieren.

Ein solches Anzeigen des Maßes kann beispielsweise einfach durch eine Leuchtdiodenanzeige realisiert sein, die aufleuchtet, sofern eine Bewegung in Richtung kälterer Oberflächentemperatur der Montageoberfläche stattfindet ausgehend vom vorhergehenden Ort.

Die Erfindung wird nachfolgend anhand der beigefügten Figur näher erläutert.

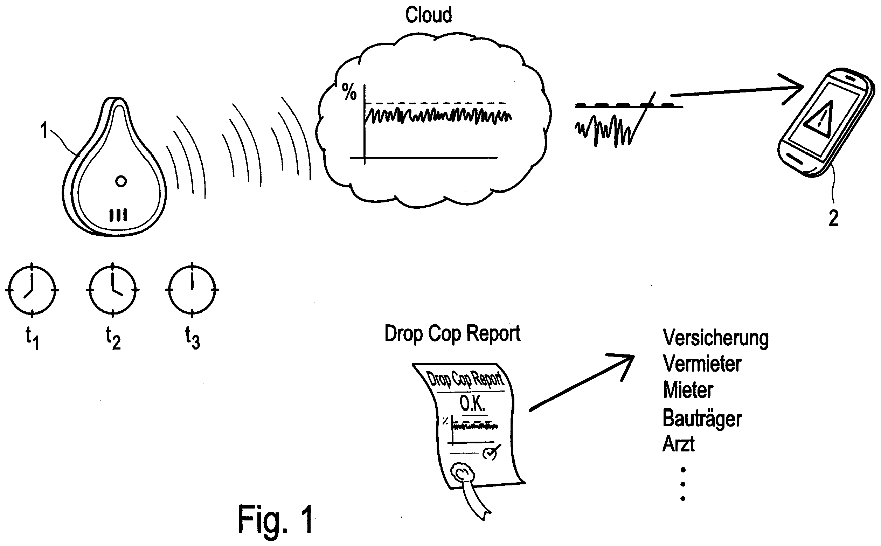

Die Fig. 1 zeigt in einer schematischen Visualisierung die Nutzung eines einzigen Messmoduls 1. Die Messmodule 1 weisen ein Gehäuse auf, in welchem die Elektronik und die zugehörigen Sensoren integriert sind. Bevorzugt kann hier ein Temperatursensor eingesetzt werden, der die Temperatur nahe der Montageoberfläche, insbesondere exakt auf der Montageoberfläche misst. Hierfür kann es vorgesehen sein, dass ein Messmodul rückseitig eine Ausnehmung in der Gehäusefläche aufweist, durch welche der Temperatursensor unmittelbar die Montagewandoberfläche kontaktieren kann.

Das Gehäuse weist weiterhin Lüftungsöffnungen auf, um den Eintritt von Raumluft zu ermöglichen und so die relative Raumluftfeuchte messen zu können.

Die Fig. 1 visualisiert, dass in zeitlichen Abständen zu den Zeitpunkten T1, T2 und T3 jeweils Messungen der Raumluftfeuchte und der Temperatur nahe der Montageoberfläche oder auf der Montageoberfläche stattfinden, wobei diese Messwerte entweder unmittelbar nach deren Erfassung oder aber auch mehrere zuvor erfasste Messwerte an eine externe Datenbank übertragen werden.

Hier können die Feuchtemesswerte der Zeit gegenübergestellt grafisch aufgetragen werden, wobei in der grafischen Auftragung visualisiert sein kann, ob durch die Temperatur auf der Montageoberfläche des Messmoduls der rechnerisch ermittelte Taupunkt unterschritten ist.

Dies kann beispielsweise auch dadurch erfolgen, dass bezogen auf eine angenommene oder aktuelle gemessene Raumtemperatur diejenige relative Luftfeuchte rechnerisch ermittelt wird, ab welcher eine Taupunktunterschreitung bei der vorliegenden Montagewandtemperatur gegeben wäre.

Ein solcher berechneter Feuchtewert kann als Grenzwert beispielsweise in die Visualisierung eingeblendet werden, um die Überschreitung des Grenzwertes durch einzelne Messwerte der Raumluftfeuchte darstellen zu können.

Bei einer Überschreitung eines Feuchtegrenzwertes oder eines sonstigen festgestellten Risikos, wie es die Fig. 1 rechts oben darstellt, kann die Erfindung vorsehen, dass eine alarmierende Mitteilung an ein mobiles Kommunikationsgerät 2, zum Beispiel ein Gerät eines Bewohners der Wohnung kommuniziert wird.

Ein Bewohner hat nach Erhalt einer solchen Alarmmeldung unmittelbar die Möglichkeit, der festgestellten Taupunktüberschreitung entgegenzuwirken, beispielsweise durch unmittelbar eingeleitetes Lüften.

Die Fig. 1 visualisiert unten rechts, dass auch die Möglichkeit besteht, aus den erfassten Messwerten, die beispielsweise in einer Datenbank eines Trustcenters gesammelt gespeichert werden können, einen Report zu erstellen, zum Beispiel einen jährlichen Report, um dem Bewohner mittels eines solchen Reportes oder auch dem Vermieter einer Wohnung eine Information darüber zur Verfügung zu stellen, ob feuchtebasierte Probleme in der betreffenden Wohnung bzw. in jeweiligen Räumen zu erwarten sind und ob das Lüftungsverhalten der Bewohner ausreichend ist.

Ein solches Dokument kann unterschiedlichen Institutionen oder Personen zur Verfügung gestellt werden, um die jeweiligen Rückschlüsse aus dem Inhalt eines solchen Reportes im Einzelfall erzielen zu können.

## Patentansprüche

1. System zur Überwachung der Feuchtebelastung von Liegenschaften, umfassend
a. wenigstens ein Messmodul (1), wobei jedes Messmodul (1) wenigstens einen Raumluftfeuchtesensor umfasst und einen Temperatursensor umfasst, mittels dem die Temperatur auf oder nahe derjenigen Montageoberfläche messbar ist, auf welcher das Messmodul (1) montiert ist und eine Elektronik aufweist, die eingerichtet ist, Messwerte zumindest von gemessener Temperatur und Raumluftfeuchte, sowie den Zeitpunkt der Messungen in zeitlichen Abständen zu erfassen und durch Telekommunikation zu versenden
b. wenigstens eine zu dem wenigstens einen Messmodul (1) separate Datenbank zur Speicherung der Messwerte eines jeweiligen Messmoduls (1), die vom Messmodul (1) durch Telekommunikation versendet sind
**dadurch gekennzeichnet, dass**
ein jeweiliges Messmodul (1) eingerichtet ist, im Rahmen der Durchführung einer Installation bei einer Bewegung des Messmoduls (1) über die Montageoberfläche hinweg ein den Gradienten der Montageoberflächentemperatur anzeigendes Maß zu signalisieren.

2. System nach Anspruch 1, **dadurch gekennzeichnet, dass** die Elektronik eines jeweiligen Messmoduls (1) oder eine externe Datenverarbeitungsanlage, insbesondere eine die Datenbank verwaltende Datenverarbeitungsanlage eingerichtet ist, aus den gemessenen Raumluftfeuchtewerten, insbesondere in Verbindung mit einer angenommenen mittleren Raumlufttemperatur oder einer messtechnisch erfassten Raumlufttemperatur den Taupunkt zu berechnen und den berechneten Taupunktwert selbst oder eine Information über eine Taupunktunterschreitung durch Temperaturmesswert an der Montageoberfläche in Verbindung mit den Messwerten zu speichern.

3. System nach einem der vorherigen Ansprüche, **dadurch gekennzeichnet, dass** ein jeweiliges Messmodul (1) einen Feuchtesensor aufweist, mittels dem die Feuchtewerte der Montageoberfläche erfassbar sind.

4. System nach einem der vorherigen Ansprüche, **dadurch gekennzeichnet, dass** die Elektronik eines jeweiligen Messmoduls (1) oder eine externe Datenverarbeitungsanlage, insbesondere eine die Datenbank verwaltende Datenverarbeitungsanlage eingerichtet ist, Wetterdaten, insbesondere Niederschlagsdaten vom Montageort zusammen mit den kommunizierten Messwerten zu speichern, insbesondere zu korrelieren.

5. System nach einem der vorherigen Ansprüche, **dadurch gekennzeichnet, dass** die Elektronik eines jeweiligen Messmoduls (1) eingerichtet ist durch Funktriangulation, insbesondere über GSM, dem Montageort des Messmoduls (1) zu bestimmen, insbesondere an die Datenbank zu kommunizieren, insbesondere wobei die Wetterdaten in Abhängigkeit des ermittelten Montageorts ermittelt sind.

6. System nach einem der vorherigen Ansprüche, **dadurch gekennzeichnet, dass** die Elektronik eines jeweiligen Messmoduls (1) einen Bewegungssensor umfasst, mittels dem die Bewegung eines Messmoduls (1), insbesondere nach der Installation und Erstinbetriebnahme feststellbar ist.

7. System nach einem der vorherigen Ansprüche, **dadurch gekennzeichnet, dass** ein jeweiliges Messmodul (1) einen Sensor umfasst, mittels dem eine Lüftung des Raumes detektierbar ist, in welchem das Messmodul (1) montiert ist, insbesondere wobei der Sensor ausgebildet ist als
a. Raumtemperatursensor und die Elektronik eingerichtet ist, ein Lüften anhand einer Raumlufttemperaturänderung innerhalb eines vorbestimmten Zeitintervalles festzustellen
b. Raumluftfeuchtesensor und die Elektronik eingerichtet ist, ein Lüften anhand einer Raumluftfeuchteänderung innerhalb eines vorbestimmten Zeitintervalles festzustellen
c. Strömungssensor und die Elektronik eingerichtet ist, ein Lüften anhand einer festgestellten Luftströmung, insbesondere länger als eine vorbestimmte Zeitdauer festzustellen.

8. System nach Anspruch 7, **dadurch gekennzeichnet, dass** die Elektronik eines Messmoduls (1) eingerichtet ist, eine Information über stattgefundene Lüftungen, insbesondere eine Zeitinformation zusammen mit den Messwerten an die Datenbank zu übertragen.

9. System nach einem der vorherigen Ansprüche, **dadurch gekennzeichnet, dass** ein jeweiliges montiertes Messmodul (1) in Höhenrichtung beabstandete Luftdurchgangsöffnungen, insbesondere am äußeren Umfang aufweist

10. System nach einem der vorherigen Ansprüche, **dadurch gekennzeichnet, dass** ein jeweiliges Messmodul (1) eine intermittierend betriebene Luftförderungsvorrichtung aufweist, insbesondere mit der ein Luftaustausch innerhalb des Messmoduls (1) vor einer Messung bewirkbar ist.

11. System nach einem der vorherigen Ansprüche, **dadurch gekennzeichnet, dass** ein jeweiliges Messmodul (1) eingerichtet ist eine Warnmeldung bei einem gemessenen Feuchtewert, der einen Grenzwert überschreitet oder bei einer festgestellten Taupunktunterschreitung an ein mobiles Kommunikationsgerät (2) zu kommunizieren.

12. System nach einem der vorherigen Ansprüche, **dadurch gekennzeichnet, dass** ein jeweiliges Messmodul (1) eine Signalisierungsvorrichtung aufweist, mittels der eine Taupunktunterschreitung oder eine Feuchteüberschreitung am Messmodul (1) signalisierbar ist.

## Claims

1. System for monitoring the exposure of properties to moisture, comprising
a. at least one measuring module (1), wherein each measuring module (1) comprises at least one room humidity sensor and comprises a temperature sensor that can be used to measure the temperature on or close to that mounting surface on which the measuring module (1) is mounted and has electronics that are set up to record measured values for at least measured temperature and room humidity, and also the time of the measurements at intervals of time, and to send them by telecommunication,
b. at least one database, separate from the at least one measuring module (1), for storing the measured values of a respective measuring module (1) that are sent by the measuring module (1) by telecommunication,
**characterized in that**
a respective measuring module (1) is set up to signal a measure indicating the gradient of the mounting surface temperature as the measuring module (1) moves over the mounting surface in the course of the performance of an installation.

2. System according to Claim 1, **characterized in that** the electronics of a respective measuring module (1) or an external data processing installation, particularly a data processing installation managing the database, is/are set up to compute the dew point from the measured room humidity values, particularly in conjunction with an assumed average room air temperature or a room air temperature recorded by metrology, and to store the computed dew point value itself or a piece of information about a dew point shortfall by a temperature measured value on the mounting surface in conjunction with the measured values.

3. System according to either of the preceding claims, **characterized in that** a respective measuring module (1) has a moisture sensor that can be used to record the moisture values of the mounting surface.

4. System according to one of the preceding claims, **characterized in that** the electronics of a respective measuring module (1) or an external data processing installation, particularly a data processing installation managing the database, is/are set up to store, particularly to correlate, weather data, particularly precipitation data, from the mounting location together with the communicated measured values.

5. System according to one of the preceding claims, **characterized in that** the electronics of a respective measuring module (1) are set up to use radio triangulation, particularly by means of GSM, to determine the mounting location of the measuring module (1), particularly to communicate it to the database, in particular wherein the weather data are ascertained on the basis of the ascertained mounting location.

6. System according to one of the preceding claims, **characterized in that** the electronics of a respective measuring module (1) comprise a motion sensor that can be used to detect the motion of a measuring module (1), particularly after installation and initial start-up.

7. System according to one of the preceding claims, **characterized in that** a respective measuring module (1) comprises a sensor that can be used to detect a ventilation of the room in which the measuring module (1) is mounted, in particular wherein the sensor is configured as
a. a room temperature sensor and the electronics are set up to detect ventilation on the basis of a change of room air temperature within a predetermined interval of time,
b. a room humidity sensor and the electronics are set up to detect ventilation on the basis of a change of room humidity within a predetermined interval of time,
c. a flow sensor and the electronics are set up to detect ventilation on the basis of a detected air flow, in particular longer than a predetermined period.

8. System according to Claim 7, **characterized in that** the electronics of a measuring module (1) are set up to transmit a piece of information about ventilations that have taken place, in particular a piece of time information, together with the measured values to the database.

9. System according to one of the preceding claims, **characterized in that** a respective mounted measuring module (1) has air passage openings spaced apart in the height direction, in particular on the outer circumference.

10. System according to one of the preceding claims, **characterized in that** a respective measuring module (1) has an intermittently operated air conveyance apparatus, in particular that can be used to cause an exchange of air within the measuring module (1) before a measurement.

11. System according to one of the preceding claims, **characterized in that** a respective measuring module (1) is set up to communicate a warning to a mobile communication appliance (2) in the event of a measured moisture value that exceeds a limit value or in the event of a detected dew point shortfall.

12. System according to one of the preceding claims, **characterized in that** a respective measuring module (1) has a signalling apparatus that can be used to signal a dew point shortfall or a moisture excess on the measuring module (1).

## Revendications

1. Système de surveillance de la charge en humidité de biens immobiliers, comprenant
a. au moins un module de mesure (1), chaque module de mesure (1) comprenant au moins un capteur d'humidité d'air ambiant et comprenant un capteur de température au moyen de laquelle peut être mesurée la température sur ou à proximité de la surface de montage sur laquelle est monté le module de mesure (1), et possédant une électronique qui est conçue pour acquérir à intervalles périodiques les valeurs de mesure au moins de la température et de l'humidité d'air ambiant mesurées et les envoyer par télécommunication,
b. au moins une base de données séparée de l'au moins un module de mesure (1), servant à enregistrer les valeurs de mesure d'un module de mesure (1) respectif qui sont envoyées par télécommunication par le module de mesure (1)
**caractérisé en ce**
**qu'**un module de mesure (1) respectif est conçu pour, dans le cadre de la réalisation d'une installation, signaler une mesure indiquant le gradient de la température de la surface de montage lors d'un déplacement du module de mesure (1) au-dessus de la surface de montage.

2. Système selon la revendication 1, **caractérisé en ce que** l'électronique d'un module de mesure (1) respectif ou un équipement de traitement de données externe, notamment un équipement de traitement de données qui gère la base de données, est conçu pour calculer le point de rosée à partir des valeurs mesurées de l'humidité de l'air ambiant, notamment en association avec une température d'air ambiant moyenne supposée ou une température d'air ambiant acquise de manière métrologique, et pour enregistrer, en association avec les valeurs de mesure, la valeur calculée elle-même du point de rosée ou une information à propos d'un franchissement vers le bas du point de rosée par la valeur mesurée de la température au niveau de la surface de montage.

3. Système selon l'une des revendications précédentes, **caractérisé en ce qu'**un module de mesure (1) respectif possède un capteur d'humidité au moyen duquel peuvent être acquises les valeurs de l'humidité de la surface de montage.

4. Système selon l'une des revendications précédentes, **caractérisé en ce que** l'électronique d'un module de mesure (1) respectif ou un équipement de traitement de données externe, notamment un équipement de traitement de données qui gère la base de données, est conçu pour enregistrer conjointement avec les valeurs de mesure communiquées, notamment pour corréler avec elles, des données météorologiques, notamment des données de précipitations du lieu de montage.

5. Système selon l'une des revendications précédentes, **caractérisé en ce que** l'électronique d'un module de mesure (1) respectif est conçue pour déterminer le lieu de montage du module de mesure (1) par triangulation par ondes radio, notamment par le biais du GSM, notamment pour le communiquer à la base de données, les données météorologiques étant notamment déterminées en fonction du lieu de montage déterminé.

6. Système selon l'une des revendications précédentes, **caractérisé en ce que** l'électronique d'un module de mesure (1) respectif comprend un détecteur de mouvement au moyen duquel peut être constaté le mouvement du module de mesure (1), notamment après l'installation et la première mise en service.

7. Système selon l'une des revendications précédentes, **caractérisé en ce qu'**un module de mesure (1) respectif comprend un capteur au moyen duquel peut être détectée une ventilation de la pièce dans laquelle est montée le module de mesure (1), le capteur étant notamment réalisé sous la forme d'un
a. capteur de température ambiante, et l'électronique est conçue pour constater une ventilation à l'aide d'une variation de la température de l'air ambiant au sein d'un intervalle de temps prédéfini,
b. capteur d'humidité de l'air ambiant, et l'électronique est conçue pour constater une ventilation à l'aide d'une variation de l'humidité de l'air ambiant au sein d'un intervalle de temps prédéfini,
c. capteur d'écoulement, et l'électronique est conçue pour constater une ventilation à l'aide d'un écoulement d'air constaté, notamment plus long qu'une durée prédéfinie.

8. Système selon la revendication 7, **caractérisé en ce que** l'électronique d'un module de mesure (1) est conçue pour transmettre à la base de données une information à propos des ventilations qui ont eu lieu, notamment une information de temps, conjointement avec les valeurs de mesure.

9. Système selon l'une des revendications précédentes, **caractérisé en ce qu'**un module de mesure (1) respectif monté possède des ouvertures de passage d'air espacées dans le sens de la hauteur, notamment sur le pourtour extérieur.

10. Système selon l'une des revendications précédentes, **caractérisé en ce qu'**un module de mesure (1) respectif possède un dispositif de transport d'air à fonctionnement intermittent, lequel permet notamment d'effectuer un échange d'air à l'intérieur du module de mesure (1) avant une mesure.

11. Système selon l'une des revendications précédentes, **caractérisé en ce qu'**un module de mesure (1) respectif est conçu pour communiquer à un appareil de communication mobile (2) un message d'alerte en présence d'une valeur mesurée de l'humidité qui est devenue supérieure à une valeur limite ou en présence d'un franchissement vers le bas constaté du point de rosée.

12. Système selon l'une des revendications précédentes, **caractérisé en ce qu'**un module de mesure (1) respectif possède un dispositif de signalisation au moyen duquel un franchissement vers le bas constaté du point de rosée ou un dépassement de l'humidité peut être signalé au module de mesure (1).
